# EUROPÄISCHE PATENTSCHRIFT

(11) **EP 1 230 316 B1**
(45) Veröffentlichungstag und Bekanntmachung des Hinweises auf die Patenterteilung: **10.09.2003**
(21) Anmeldenummer: 00979505.5
(22) Anmeldetag: 19.10.2000
(51) Int. Cl.: C09K 3/14

(54) **SCHLEIFKORN MIT SCHLEIFAKTIVER UMMANTELUNG**
ABRASIVE GRAIN WITH AN ABRASIVE COATING
GRAIN ABRASIF COMPORTANT UNE ENVELOPPE A EFFET ABRASIF

(30) Priorität: 25.10.1999 DE 19951250
(43) Veröffentlichungstag der Anmeldung: 14.08.2002
(73) Patentinhaber: Treibacher Schleifmittel GmbH, 79725 Laufenburg (DE)
(72) Erfinder: WURZER, Thomas, A-9220 Velden am Wörthersee (AT); SKALE, Franz, A-9523 Villach (AT)
(74) Vertreter: Neunert, Peter Andreas
(86) Internationale Anmeldenummer: EP0010294
(87) Internationale Veröffentlichungsnummer: WO01030935

(56) Entgegenhaltungen:
- EP-A- 0 008 868
- WO-A-94/02562
- DE-A- 2 339 507
- GB-A- 1 254 781
- US-A- 4 226 626
- US-A- 5 738 695

## Beschreibung

Die vorliegende Erfindung betrifft ein Schleifkorn nach dem Oberbegriff des Anspruchs 1, das mit einem Überzug, der mindestens einen schleifaktiven Stoff enthält, versehen ist, ein Verfahren zu seiner Herstellung und seine Verwendung.

Der Einsatz von schleifaktiven Stoffen bei der Herstellung von Schleifmitteln ist bekannt und wird in der Praxis sowohl für Schleifmittel auf Unterlage (Schleifbänder und Schleifpapiere) als auch für gebundene Schleifmittel (Schleifscheiben) häufig angewendet. Die schleifaktiven Stoffe gehen beim Schleifen chemische Reaktionen ein bzw. bewirken physikalische Vorgänge, die den Schleifprozeß positiv beeinflussen und zu einer Standzeiterhöhung des Schleifwerkzeuges führen, bei gleichzeitiger Reduzierung oder vollkommener Vermeidung von thermischen Schädigungen des Werkstückes. So bestehen die Aufgaben der schleifaktiven Stoffe darin, ähnlich wie ein Hochtemperatur- und Hochdruckschmiermittel die Reibung zwischen Schleifkorn und Werkstück herabzusetzen, ein Festschweißen des Schleifspans am Korn oder am Werkstück durch eine Reaktion mit der frischen Spanoberfläche zu verhindern, die auftretende Wärme in Form von Schmelz-, Verdampfungs-, Sublimations- oder Dissoziationswärme aufzunehmen und die Schneiden des Schleifkorns vor einer Reaktion mit dem Werkstoff zu schützen.

Als besonders gut geeignete schleifaktive Stoffe haben sich beispielsweise Halogenide (Bleichlorid, Kryolith, Flußspat, Kaliumtetrafluoroborat u.a.), Chalkogenide (Pyrit, Antimonsulfid, Zinksulfid, Molybdänsulfid u.a.), niedrig schmelzende Metalle (Zn u.a.) und Hochdruckschmiermittel (Graphit u.a.) erwiesen.

Üblicherweise wird bei der Herstellung des Schleifmittels der schleifaktive Füllstoff neben anderen Füllstoffen in die Bindemittelmischung gegeben, die dann zusammen mit dem Schleifkorn und sonstigen Mischungskomponenten (Flüssigharz o. a.) weiter zum Schleifmittel verarbeitet werden. Neben den schleifaktiven Füllstoffen werden häufig inaktive Füllstoffe, wie Holz- oder Gesteinsmehl, Kreide, Tone u.a., die üblicherweise zur Verfüllung von Kunststoffen (zwecks Harzerspamis) eingesetzt werden, verfestigende Füllstoffe, wie z.B. Glasfasern o.a., die zur Erhöhung der Festigkeit des Bindungssteges eingesetzt werden, und/oder Füllstoffe wie Bimsstein oder Korkpulver, mit deren Hilfe die Selbstschärfungseigenschaften einer Schleifscheibe verbessert werden, eingesetzt.

Ein Nachteil dieses herkömmlichen Vorgehens ist darin zu sehen, dass die schleifaktiven Füllstoffe gleichmäßig über das gesamte Schleifmittel verteilt sind. Ihre schleifaktive Wirkung ist jedoch vor allem dort erforderlich, wo auch der eigentliche Schleifprozeß stattfindet, nämlich dort, wo das Schleifkom mit dem Werkstück zusammentrifft, also in unmittelbarer Nähe des Schleifkoms. Es werden somit üblicherweise mehr schleifaktive Füllstoffe eingesetzt als prinzipiell notwendig wäre, was insofern von Bedeutung ist, da geeignete Substanzen häufig sehr teuer und/oder toxisch sind.

In der deutschen Offenlegungsschrift DE 2 339 507 werden Schleifkörper beschrieben, die aus Schleifkörnern aufgebaut sind, die eine abdichtende Ummantelung mit werkstoffaktiven Füllstoffeigenschaften aufweisen.

Dabei handelt es sich jeweils um Ummantelungen, die für den Herstellungsprozeß und für das entsprechende Schleifmittel als spezifisch anzusehen sind. So geht es bevorzugt darum, die Verwendung hygroskopischer, sublimierender oder flüssiger Substanzen als Füllstoffe zu ermöglichen.

Wegen der Gefahr der Agglomeratbildung oder des Zusammenklebens müssen derart ummantelte Schleifkörner direkt verarbeitet werden. Bei gleichbleibender Leistung gelingt es so, den Einsatz an schleifaktiven Füllstoffen zu reduzieren und die Verwendung neuer, weniger kritischer Füllstoffe zu ermöglichen.

Der Erfindung dagegen liegt die Aufgabe zugrunde, universell, für die unterschiedlichsten Anwendungen einsetzbare Schleifkörnungen zu entwickeln, die mit einem Überzug, der mindestens einen schleifaktiven Füllstoff enthält, versehen, lagerfähig sind, nicht zur Agglomeratbildung neigen und eine für eine problemlose Verarbeitung ausreichende Rieselfähigkeit besitzen.

Ziel der Erfindung ist es vor allem auch, die Leistungsfähigkeit des mit dem erfindungsgemäßen Schleifkom hergestellten Schleifmittels zu erhöhen, wodurch indirekt natürlich auch der Anteil an eingesetztem schleifaktivem Füllstoff pro Schleifoperation reduziert wird, was zusätzlich ökologische Vorteile mit sich bringt.

Diese Aufgabe wird gelöst, indem man eine Schleifkörnung zunächst intensiv mit einem Binder mit niedriger Viskosität vermischt und anschließend einen schleifaktiven Füllstoff zumischt, so dass auf der Oberfläche des Schleifkorns ein Überzug erhalten wird, der gleichmäßig verteilt einen schleifaktiven Füllstoff enthält.

Es wurde gefunden, dass durch intensives Mischen einer Schleifkörnung mit einem niedrigviskosen Binder und anschließendem Zumischen eines schleifaktiven Füllstoffes ein gleichmäßiger Überzug erhalten wird, der dann durch eine Temperaturbehandlung oder Zugabe von Härtern vor- oder ausgehärtet werden kann, wonach die entsprechend behandelte Schleifkörnung auch über einen längeren Zeitraum gelagert werden kann, ohne dass sich Klumpen oder Agglomerate bilden. Die Schleifkömung weist eine hervorragende Rieselfähigkeit aus und kann problemlos für die unterschiedlichsten Anwendungen eingesetzt werden. Beim Einsatz des erfindungsgemäßen Schleifkorns in Schleifmitteln wurden enorme Leistungssteigerungen gefunden.

Bei Vergleichsversuchen wurde darüber hinaus gefunden, dass das erfindungsgemäße Schleifkorn beim Einsatz in Schleifmitteln zu deutlich bessere Abtragsleistungen führte im Vergleich zu einem mit dem gleichen Gesamtanteil an aktiven Füllstoffen produzierten Schleifmittel auf Basis von nicht ummantelten Schleifkörnern.

Zur Herstellung der erfindungsgemäßen Schleifkörnung werden im ersten Schritt die zu ummantelnden Schleifkörner mit einem Binder solange vermischt, bis alle Körner gleichmäßig vom Binder umhüllt sind.

Als Schleifkorn können sowohl konventionelle Schleifkörner wie Korund oder SiC als auch die sogenannten Superschleifmittel wie Diamant oder CBN eingesetzt werden. In der Korngröße gibt es keine Einschränkungen. Allerdings wird das Verfahren bevorzugt im Makrokornbereich eingesetzt.

Als Binder können sowohl anorganische als auch organische Binder eingesetzt werden. Bevorzugt werden Harze mit niedriger Viskosität aus der Gruppe der Phenolharze eingesetzt. Sehr gute Ergebnisse wurden mit basenkondensierten oder neutralen Phenol-Formaldehyd-Kunstharzen erzielt. Als gut geeignet erwiesen sich auch Harze auf Epoxid- oder Polyurethanbasis. Daneben sind aber auch anorganische Polymere aus der Gruppe der Silikate oder Phosphate gut geeignet, von denen bevorzugt Aluminiumphosphat eingesetzt wird. Die Viskosität des Binders sollte unter 1000 mPa*s, vorzugsweise unter 700 mPa*s liegen. Der Binderanteil liegt üblicherweise zwischen 0,5 und 8 Gew.-%, bezogen auf das eingesetzte Schleifkorn. Besonders gute Ergebnisse werden dann erzielt wenn der Binderanteil über 1 Gew.-% liegt und nicht über 5 Gew.-% hinausgeht.

Zum Mischen können die üblichen Mischaggregate eingesetzt werden. Vorteilhaft ist die Verwendung eines heizbaren Intensivmischers, so dass das Vermischen mit Binder, das Zumischen des Aktivstoffes und der Trocknungsvorgang (Vorhärten) in einem Schritt durchgeführt werden können. Besonders gleichmäßig und elegant erfolgt der Auftrag des Überzugs in einer Wirbelschicht, wobei ebenfalls Vermischen und Vorhärten vorteilhaft in einem Verfahrensschritt erfolgt.

In einem zweiten Schritt wird zu der mit Binder umhüllten Schleifkörnung der entsprechende Aktivstoff zugemischt. Einer der Vorteile des Verfahrens ist, dass dazu sämtliche bekannten schleifaktiven Füllstoffe eingesetzt werden können. Vorzugsweise werden Sulfide, Phosphate, Carbonate, Halogenide und/oder sulfid-, phosphat-, carbonat- oder halogenidhaltige Komplexverbindungen aus der Gruppe der Elemente Na, K, Ca, Mg, Al, Mn, Cu, Sn, Fe, Ti, Sb und/oder Zn eingesetzt.

Überraschenderweise konnten mit Mischungen aus Calciumfluorid und Tricalciumphosphat sowie Mangansulfat und Lithiumcarbonat, die in dieser Zusammensetzung als schleifaktive Füllstoffe bisher nicht bekannt waren, sehr gute Ergebnisse erzielt werden. Als weiterer Vorteil kommt bei beiden Kombinationen hinzu, dass sie lediglich geringe bzw. keine Toxizität aufweisen und leicht zu handhaben sind.

Der Anteil an schleifaktivem Füllstoff liegt üblicherweise zwischen 1 und 15 Gew.-%, bevorzugt zwischen 3 und 10 Gew.-%, jeweils bezogen wieder auf die Menge an eingesetztem Schleifkorn. Um eine gleichmäßige Verteilung des Füllstoffes zu erreichen, sollte bei der Verarbeitung von Makrokörnungen, die einen Bereich von einigen Millimetern bis ca. 50 µm abdecken, die mittlere Partikelgröße des Aktivstoffes unter 50 µm, bevorzugt unter 20 µm liegen. Allgemein sollte die Partikelgröße des Aktivstoffes so gewählt werden, dass bei einer gleichmäßigen Ummantelung des Schleifkorns mit Aktivstoff die fertige Körnung noch innerhalb der Toleranz des jeweiligen Standards für die Korngrößenverteilung der nicht ummantelten Ausgangskörnung liegt. Für die Ummantelung von Mikrokömungen müssen daher die schleifaktiven Füllstoffe in Pigmentform eingesetzt werden. Besonders günstig ist es, im Mikrokombereich, der Korngrößen von ca. 80 µm bis hinunter zu ca.1 µm umfaßt, Lösungen der entsprechenden schleifaktiven Füllstoffe einzusetzen.

Sobald der Aktivstoff gleichmäßig auf den mit Binder benetzten Schleifkörnern verteilt ist, erfolgt eine teilweise oder vollständige thermische Aushärtung der Ummantelung, wobei dann der schleifaktive Füllstoff fest an die Kornoberfläche gebunden wird. Die Trocknungstemperatur selber variiert natürlich in Abhängigkeit vom eingesetzten Binder. Der bevorzugte Temperaturbereich für die Trocknung von Flüssigharz liegt zwischen 80 und 130 °C. Die anorganischen Binder dagegen müssen bei wesentlich höheren Temperaturen verarbeitet werden. So erfordert z.B. ein Binder auf Basis von Aluminiumphosphat Brenntemperaturen von mindestens 400 °C, vorzugsweise 700 °C, um eine Verfestigung der Ummantelung zu erreichen. Es können alle bekannten Trocknungs- oder Brennverfahren bzw. -aggregate eingesetzt werden. Für viele Anwendungen ist es vorteilhaft, lediglich eine thermische Vorhärtung durchzuführen und damit gleichzeitig die Reaktivität des jeweiligen Binders zumindest teilweise zu erhalten, die dann bei der Einbindung des ummantelten Korns in einem anderen System genutzt werden kann.

Wird als Binder ein Polyurethan- oder Epoxyharz eingesetzt, so erfolgt die Aushärtung durch den Zusatz von Härtern, entsprechend den Vorschriften des jeweiligen Herstellers. In allen Fällen liegt nach dem teilweise oder vollständigen Aushärten eine riesel- und lagerfähige Körnung vor, die wie jede unbehandelte Körnung problemlos verarbeitet werden kann.

Verwendung findet das mit einer schleifaktiven Ummantelung versehene Schleifkom in jeder Art von Schleif- und Poliermitteln. Besonders vorteilhaft kann das erfindungsgemäße Schleifkorn in kunstharzgebundenen Schleifmitteln (Schleifmittel auf Unterlage und Schleifscheiben bzw. Schleifkörper) eingesetzt werden. Überaschenderweise wurde darüber hinaus im Rahmen der Untersuchungen festgestellt, dass die Einbindung des Korns in die Kunstharzbindung an sich deutlich verbessert wird, so dass sich der Einsatz des erfindungsgemäßen Schleifkorns nicht allein auf Schleifmittel beschränkt, sondern allgemein bei sämtlichen kunstharzgebundenen Produkten, bei denen Korund eingelagert wird (Laminate, Lacke und ähnliches), sinnvoll ist.

Im folgenden wird die Erfindung beispielhaft erläutert, ohne dass darin eine Einschränkung zu sehen ist.

### Beispiele 1 - 6

1 kg Normalkorund Korn F36 (Alodur ESK, Fa. Treibacher Schleifmittel) wurde mit je 15 g bzw. 25 g Flüssigharz (Peracit 5208G, Fa. Perstorp) in einem Intensivmischer ca. 3 Minuten gemischt. Die Viskosität des Harzes betrug 500 mPa*s. Anschließend wurden je 25, 50 und 75 g einer Mischung aus Calciumfluorid und Calciumtriphosphat (molares Mischungsverhältnis 1:1) hinzugegeben und der Mischungsvorgang ca. 1 Minute fortgesetzt. Danach wies das Korn einen gleichmäßigen Überzug aus schleifaktivem Füllstoff auf. Schon während des Mischens wurde das Korn unter Einfluß eines Heißluftstrahls so weit ausgehärtet, dass die Schleifkörnung auch nach längerer Lagerzeit in Form von rieselfähigen Einzelkörnern vorlag und sich problemlos verarbeiten ließ.

### Beispiele 7 - 9

Wie Beispiele 1 - 6. Als Füllstoff wurde eine Mischung aus Lithiumcarbonat/Mangansulfat (im Mischungsverhältnis 1:1) zugegeben. Die Flüssigharzmenge betrug jeweils 15 g.

### Beispiel 10

Die Herstellung erfolgte in Analogie zu den Beispielen 1 - 6. Die Ausgangskörnung wurde mit 15 g Flüssigharz und anschließend mit 50 g Kryolith als Aktivstoff vermischt.

### Beispiel 11

Die Herstellung erfolgte in Analogie zu den Beispielen 1 - 6. Es wurden jedoch 15 g eines Flüssigharzes mit einer Viskosität von 900 mPa*s (Typ 9457 SL, Fa. Bakelite) eingesetzt. Als Aktivstoff wurden 50 g der Calciumfluorid/Calciumtriphosphat-Mischung verwendet.

### Beispiel 12

Wie Beispiel 14. Lediglich der Flüssigharztyp wurde variiert. Es wurde ein Flüssigharz mit einer niedrigen Viskosität von 350 mPa*s (PP 281, Fa. Vianova) verwendet.

### Beispiele 13 - 18

1 kg Normalkorund der Körnung F36 (Alodur ESK, Fa. Treibacher Schleifmittel) wurde mit je 5, 10 und 15 g eines anorganischen Binders auf Aluminiumphopshatbasis (Fabutit 705, Fa. Chemische Fabriken Budenheim) vermischt. Zu den Mischung wurden jeweils 15 bzw. 30 g einer Lithiumcarbonat/Mangansulfat-Mischung als Aktivstoff hinzu gegeben. Die Mischungszeiten waren analog zu den Beispielen 1 - 6. Die ummantelte Körnung wurde anschließend in einem Drehrohrofen bei 600 °C gebrannt.

### Beispiele 19 - 20 (Schleiftests)

Mit allen Körnungen der Beispiele 1 - 18 wurden standardmäßig Trennscheiben hergestellt, wobei jeweils 815 g Korn F36 mit 40 g eines hochviskosen Flüssigharzes (ca. 3000 mPa*s / (Typ 5137, Fa. Perstorp) und 180 g einer sogenannten Pulverbindung, bestehend aus 42 Gew.-% Pulverharz (Typ 5061, Fa. Perstorp) und 58 Gew.-% Füllstoffen (bestehend aus ca. 60 % Pyrit, ca. 35 Kryolith % und ca. 5 % Calciumoxid) vermischt wurde. Ein Teil der Korn-Harz-Mischung wurde in einer entsprechenden Form mit einem Preßdruck von 90 Tonnen zu einer Trennscheibe verpresst und anschließend 14 Stunden bei 180 °C ausgehärtet. Die fertige Scheibe hatte einen Durchmesser von 180 mm und eine Dicke von 3 mm.

Parallel wurden als Vergleichsbeispiele
- eine Standardtrennscheibe mit einem nicht ummantelten Korn (Beispiel 19) und
- eine Standardtrennscheibe mit leicht erhöhtem Flüssigharzanteil (60 g) und einer Pulverbindung der zusätzlich 50 g einer Calciumfluorid/Calciumtriphosphat-Mischung zugegeben wurde, hergestellt (Beispiel 20).

Mit allen Scheiben wurden Trenntests mit einer Schnittgeschwindigkeit von 35 m/s durchgeführt. Als Werkstoff wurde der Baustahl ST37 eingesetzt. Das Werkstück selber hatte einen Durchmesser 6 mm. Die Auswertung erfolgte nach 25 Trennschnitten. Der G-Faktor berechnet sich aus dem Verhältnis getrennte Fläche zum Scheibenverschleiß.

In der folgenden Tabelle sind die Versuchsbedingungen und Testergebnisse zusammengefaßt:

**Tabelle 1:**

| Schleiftests | | | | |
|---|---|---|---|---|
| | schleifaktive Ummantelung | | | |
| Beispiel | Binder | Füllstoff | Scheibenrezeptur | G-Faktor |
| 1 | 15 g Harz Typ 1 | 25 g CaF₂/Ca₃(PO₄)₂ | Standard | 13 |
| 2 | 25 g Harz Typ 1 | " | " | 13 |
| 3 | 15 g Harz Typ 1 | 50 g CaF₂/Ca₃(PO₄)₂ | " | 16 |
| 4 | 25 g Harz Typ 1 | " | " | 15 |
| 5 | 15 g Harz Typ 1 | 75 g CaF₂/Ca₃(PO₄)₂ | " | 12 |
| 6 | 25 g Harz Typ 1 | " | " | 13 |
| 7 | 15 g Harz Typ 1 | 25 g Li₂CO₃/MnSO₄ | Standard | 12 |
| 8 | " | 50 g Li₂CO₃/MnSO₄ | " | 15 |
| 9 | " | 75 g Li₂CO₃/MnSO₄ | " | 13 |
| 10 | 15 g Harz Typ 1 | 50 g Kryolith | Standard | 13 |
| 11 | 15 g Harz Typ 2 | 50 g CaF₂/Ca₃(PO₄)₃ | " | 14 |
| 12 | 15 g Harz Typ 3 | 50 g CaF₂/Ca₃(PO₄)₃ | " | 12 |
| 13 | 5 g Al-phosphat | 15 g Li₂CO₃/MnSO₄ | Standard | 14 |
| 14 | 10 g Al-phosphat | " | " | 13 |
| 15 | 15 g Al-phosphat | " | " | 11 |
| 16 | 5 g Al-phosphat | 30 g Li₂CO₃/MnSO₄ | " | 12 |
| 17 | 10 g Al-phosphat | " | " | 13 |
| 18 | 15 g Al-phosphat | " | " | 10 |

| Vergleichsbeispiele: | | | | |
|---|---|---|---|---|
| | | | | |
| 19 | Standard (Stand der Technik) | | * | 9 |
| 20 | Standard +60 g Flüssigharz + 50 g CaF₂/Ca₃(PO₄)₃ | | ** | 11 |

| | | | | |
|---|---|---|---|---|
| * = Scheibe mit einem konventionellen Schleifkorn in einer üblichen Rezeptur, die schleifaktive Füllstoffe direkt vermischt im Kunstharzbinder enthält. | | | | |
| ** = Scheibe wie 19, bei der jedoch zusätzlich direkt zur Rezeptur die Menge an schleifaktivem Füllstoff (und Binder), die der schleifaktiven Ummantelung in Beispiel 3 entspricht, zugegeben wurde. | | | | |

## Patentansprüche

1. Rieselfähige Schleifkörnung aus einzelnen Schleifkörnern auf Basis von Aluminiumoxid, Siliziumcarbid, kubischem Bornitrid und/oder Diamant,
**dadurch gekennzeichnet, dass** die einzelnen Schleifkörner einen Überzug aufweisen, der aus einem anorganischen oder organischen Binder besteht und wenigstens einen schleifaktiven Füllstoff enthält, wobei der Anteil an Binder 0,5 bis 8 Gew.-% und der Anteil an Füllstoff 1 bis 15 Gew.-%, jeweils bezogen auf das Ausgangkorn, beträgt.

2. Schleifkorn nach Anspruch 1,
**dadurch gekennzeichnet, dass** als schleifaktive Füllstoffe Sulfide, Phosphate, Carbonate, und/oder Halogenide und/oder sulfid-, phosphat-, carbonatund/oder halogenidhaltige Komplexverbindungen aus der Gruppe der Elemente Na, Li, K, Mg, Al, Mn, Cu, Sn, Fe, Ti, Sb und/oder Zn eingesetzt werden.

3. Schleifkorn nach Anspruch 1 oder 2,
**dadurch gekennzeichnet, dass** der Anteil an schleifaktivem Füllstoff 3 - 10 Gew.-%, bezogen auf das Ausgangkorn, beträgt.

4. Schleifkorn nach einem der Ansprüche 1 bis 3,
**dadurch gekennzeichnet, dass** als schleifaktiver Füllstoff eine Mischung aus Calciumfluorid und Calciumtriphosphat eingesetzt wird.

5. Schleifkorn nach Anspruch 4,
**dadurch gekennzeichnet, dass** das molare Mischungsverhältnis Calciumfluorid : Calciumtriphosphat 1 : 1 beträgt.

6. Schleifkorn nach einem der Ansprüche 1 bis 3,
**dadurch gekennzeichnet, dass** als schleifaktivsr Füllstoff eine Mischung aus Lithiumcarbonat und Mangansulfat eingesetzt wird.

7. Schleifkorn nach Anspruch 6,
**dadurch gekennzeichnet, dass** das molare Mischungsverhältnis Lithiumcarbonat : Mangansulfat 1 : 1 beträgt.

8. Schleifkorn nach einem der Ansprüche 1 bis 7,
**dadurch gekennzeichnet, dass** als Binder ein Harz mit niedriger Viskosität aus der Gruppe Phenolharz, Epoxyharz und/oder Polyurethanharz eingesetzt wird.

9. Schleifkorn nach Anspruch 8,
**dadurch gekennzeichnet,dass** die Viskosität des Harzes unter 1000 mPa*s liegt.

10. Schleifkorn nach Anspruch 8 oder 9,
**dadurch gekennzeichnet, dass** die Viskosität unter 700 mPa*s liegt.

11. Schleifkorn nach einem der Ansprüche 1 bis 7,
**dadurch gekennzeichnet, dass** als Binder anorganische Polymere aus der Gruppe der Silikate und/oder Phosphate eingesetzt werden.

12. Schleifkorn nach Anspruch 11,
**dadurch gekennzeichnet, dass** als anorganischer Binder Aluminiumphosphat eingesetzt wird.

13. Schleifkorn nach einem der Ansprüche 1 bis 12,
**dadurch gekennzeichnet,dass** der Binderanteil 1 bis 5 Gew.-% bezogen auf das Ausgangskorn beträgt.

14. Verfahren zur Herstellung von Schleifkörnern nach einem der Ansprüche 1 bis 13,
**dadurch gekennzeichnet,dass**
a) im ersten Schritt die Schleifkörner mit dem Binder solange vermischt werden, bis sie gleichmäßig von dem Binder umhüllt sind,
b) anschließend der schleifaktive Füllstoff zugegeben und mit den umhüllten Schleifkörnern vermischt wird, bis eine gleichmäßige Verteilung des schleifaktiven Füllstoffes auf der Kornoberfläche erreicht ist, und
c) dann eine teilweise oder vollständige Aushärtung der Ummantelung durchgeführt wird.

15. Verfahren nach Anspruch 14,
**dadurch gekennzeichnet, dass** organische Binder eingesetzt werden und die Aushärtung durch Zugabe eines Härters und/oder eine thermische Nachbehandlung erfolgt.

16. Verfahren nach Anspruch 15,
**dadurch gekennzeichnet, dass** die thermische Nachbehandlung in einem Temperaturbereich zwischen 80 und 130°C erfolgt.

17. Verfahren nach Anspruch 14,
**dadurch gekennzeichnet, dass** anorganische Binder eingesetzt werden und die Aushärtung des Binders durch eine thermische Nachbehandlung in einem Brennofen durchgeführt wird.

18. Verfahren nach Anspruch 17,
**dadurch gekennzeichnet, dass** die thermische Nachbehandlung bei Temperaturen ≥ 400°C erfolgt.

19. Verwendung von Schleifkörnern nach einem der Ansprüche 1 bis 13 zur Herstellung von Schleifmitteln.

20. Verwendung von Schleifkörnern nach einem der Ansprüche 1 bis 13 in Produkten auf Kunstharzbasis.

## Claims

1. A flowable, granular abrasive material comprising individual abrasive grains based on aluminium oxides, silicon carbide, cubic boron nitride and/or diamond,
**characterised in that** the individual abrasive grains comprise a coating which consists of an inorganic or organic binder and contains at least one abrasive filler, wherein the proportion of binder amounts to 0.5 to 8 wt.% and the proportion of filler to 1 to 15 wt.%, in each case relative to the initial grain.

2. An abrasive grain according to claim 1,
**characterised in that** sulfides, phosphates, carbonates and/or halides and/or complex compounds containing sulfides, phosphates, carbonates and/or halides from the group comprising the elements Na, Li, K, Mg, Al, Mn, Cu, Sn, Fe, Ti, Sb and/or Zn are used as the abrasive fillers.

3. An abrasive grain according to claim 1 or 2,
**characterised in that** the proportion of abrasive filler amounts to 1-15 wt.%, preferably to 3-10 wt.%, relative to the initial grain.

4. An abrasive grain according to one of claims 1 to 3,
**characterised in that** a mixture of calcium fluoride and calcium triphosphate is used as the abrasive filler.

5. An abrasive grain according to claim 4,
**characterised in that** the molar mixing ratio of calcium fluoride:calcium triphosphate amounts to 1:1.

6. An abrasive grain according to one of claims 1 to 3,
**characterised in that** a mixture of lithium carbonate and manganese sulfate is used as the abrasive filler.

7. An abrasive grain according to claim 6,
**characterised in that** the molar mixing ratio of lithium carbonate:manganese sulfate amounts to 1:1.

8. An abrasive grain according to one of claims 1 to 7,
**characterised in that** a low-viscosity resin from the group comprising phenolic resin, epoxy resin and/or polyurethane resin is used as the binder.

9. An abrasive grain according to claim 8,
**characterised in that** the viscosity of the resin is below 1000 mPa·s.

10. An abrasive grain according to claim 8 or 9,
**characterised in that** the viscosity of the resin is preferably below 700 mPa·s.

11. An abrasive grain according to one of claims 1 to 7,
**characterised in that** inorganic polymers from the group comprising silicates and/or phosphates are used as the binder.

12. An abrasive grain according to claim 11,
**characterised in that** aluminium phosphate is used as the inorganic binder.

13. An abrasive grain according to one of claims 1 to 12,
**characterised in that** the proportion of binder amounts to 0.5 to 8 wt.%, preferably to 1 to 5 wt.%, relative to the initial grain.

14. A process for the production of abrasive grains according to one of claims 1 to 13,
**characterised in that**
a) in the first step the abrasive grains are mixed with the binder until they are uniformly covered by the binder,
b) then the abrasive filler is added and mixed with the covered abrasive grains until a uniform distribution of the abrasive filler on the grain surface has been achieved, and
c) the covering is partially or completely hardened.

15. A process according to claim 14, **characterised in that**
organic binders are used and hardening is effected by addition of a curing agent and/or thermal post-treatment.

16. A process according to claim 15,
**characterised in that** the thermal post-treatment proceeds within a temperature range of between 80 and 130°C.

17. A process according to claim 14,
**characterised in that** inorganic binders are used and hardening of the binder is effected by thermal post-treatment in a kiln.

18. A process according to claim 17,
**characterised in that** thermal post-treatment proceeds at temperatures of ≥400°C.

19. Use of abrasive grains according to one of claims 1 to 13 for the production of abrasives.

20. Use of abrasive grains according to one of claims 1 to 13 in synthetic resin-based products.

## Revendications

1. Granulation abrasive présentent une faculté d'écoulement et composée de grains uniques à base d'oxyde d'aluminium, de carbure de silicium, de nitrure de bore cubique et/ou de diamant,
**caractérisée en ce que**
les grains abrasifs distinctifs présentent une enveloppe, composée d'un liant minéral ou organique et d'au moins une matière de charge abrasive, la proportion du liant étant comprise entre 0,5 et 8 % et la proportion de la matière de charge étant comprise entre 1 et 15 %. chacune des proportions étant exprimée en fonction du grain de sortie.

2. Grain abrasif selon la revendication 1.
**caractérisé en ce que**
comme matières de charge abrasives on utilise du sulfure, du phosphate, du carbonate, et/ou de l'halogénure et/ou des liaisons complexes sulfurées, phosphatées, carbonées et/ou halogénées du groupe d'éléments Na, Li, K. Mg. Al. Mn, Cu, Sn, Fe, Ti, Sb et/ou Zn.

3. Grain abrasif selon la revendication 1 ou 2.
**caractérisé en ce que**
la proportion de matière de charge abrasive est comprise entre 3 et 10 %. cette proportion étant exprimée en fonction du grain de sortie.

4. Grain abrasif selon l'une des revendications 1 à 3,
**caractérisé en ce qu'**
un mélange de fluorure de calcium et de phosphate de calcium est utilisé comme matière de charge abrasive.

5. Grain abrasif selon la revendication 4,
**caractérisé en ce que**
le rapport de mélange molaire fluorure de calcium : triphosphate de calcium est de 1:1.

6. Grain abrasif selon l'une des revendications 1 à 3,
**caractérisé en ce qu'**
un mélange de carbonate de lithium et de sulfate de manganèse est utilisé comme matière de charge abrasive.

7. Grain abrasif selon la revendication 6,
**caractérisé en ce que**
le rapport de mélange molaire carbonate de lithium : sulfate de manganèse est de 1:1.

8. Grain abrasif selon l'une des revendications 1 à 7,
**caractérisé en ce qu'**
une résine de faible viscosité du groupe de résine de phénol, de résine époxy et/ou de résine polyuréthane est utilisée comme liant.

9. Grain abrasif selon la revendication 8.
**caractérisé en ce que**
la viscosité de la résine est inférieure à 1000 mPa*s.

10. Grain abrasif selon la revendication 8 ou 9,
**caractérisé en ce que**
la viscosité est inférieure à 700 mPa*s.

11. Grain abrasif selon l'une des revendications 1 à 7,
**caractérisé en ce que**
des polymères minéraux groupe de silicate et/ou de phosphate sont utilisés comme liant.

12. Grain abrasif selon la revendication 11.
**caractérisé en ce que**
du phosphate d'aluminium est utilisé comme liant minéral.

13. Grain abrasif selon l'une des revendications 1 à 12,
**caractérisé en ce que**
la proportion de liant est comprise entre 1 et 5 %, cette proportion étant exprimée en fonction du grain de sortie.

14. Procédé de fabrication de grains abrasifs selon l'une des revendications 1 à 13.
**caractérisé en ce que**
a) au cours de la première étape, les grains abrasifs sont mélangés au liant tant qu'ils ne sont pas enveloppés de manière uniforme par le liant,
b) ensuite, la matière de charge abrasive est ajoutée et mélangée aux grains abrasifs enveloppés, jusqu'à l'obtention d'une répartition uniforme de la matière de charge abrasive à la surface du grain et
c) enfin, un durcissement partiel ou complet de l'enveloppe est effectué.

15. Procédé selon la revendication 14.
**caractérisé en ce que**
des liants organiques sont utilisés et le durcissement est effectué en ajourant un durcisseur et/ou un post-traitement thermique.

16. Procédé selon la revendication 15.
**caractérisé en ce que**
le post-traitement thermique est assuré dans une plage de températures comprise entre 80 et 130 °C.

17. Procédé selon la revendication 14,
**caractérisé en ce que**
des liants inorganiques sont utilisés et le durcissement du liant est effectué à l'aide d'un post-traitement thermique dans un four à combustion.

18. Procédé selon la revendication 17,
**caractérisé en ce que**
le post-traitement thermique est assuré pour des températures ≥ 400 °C.

19. Utilisation des grains abrasifs selon l'une des revendications 1 à 13. pour fabriquer des produits abrasifs.

20. Utilisation des grains abrasifs selon l'une des revendications 1 à 13 dans des produits à base de résine synthétique.
